# EUROPEAN PATENT APPLICATION

(11) **EP 1 582 719 A1**
(43) Date of publication of application: **05.10.2005**
(21) Application number: 04251998.3
(22) Date of filing: 02.04.2004
(51) Int. Cl.: F02D 41/02, F02D 41/12, F01N 9/00, F01N 3/021

(54) **Diesel engine control system**

(71) Applicant: Delphi Technologies, Inc., Troy, MI 48007 (US)
(72) Inventor: Schreurs, Bart, 6700 Waltzing (BE)
(74) Representative: Jones, Keith William

(57) **Abstract**

A system for an internal combustion engine (10) that enables continued regeneration of a diesel particulate filter (24) during deceleration is disclosed. A fuel injection pulse (64) is made with a minimum amount of fuel during deceleration. This enables the exhaust gases to be kept at a higher temperature. In addition, post fuel injection (66), air inlet throttling (68) and exhaust gas recirculation (70) can be utilised during deceleration to increase the exhaust gas temperature.

## Description

The present invention relates to diesel engine control systems and particularly, but not exclusively, to diesel engine control systems having diesel particulate filters.

Diesel particulate filters (DPFs) are used in exhaust systems in diesel engines to remove particulates from exhaust gases. A DPF can only remove a certain amount of particulates before it starts to clog which prevents exhaust gases from escaping effectively. When DPFs are heated above a predetermined temperature, typically around 600°C, the particulates, which are mostly in the form of carbon, are burned off. This process is termed "regeneration" and prevents the DPF from becoming too clogged with particulates without releasing raw particulates to the atmosphere.

The required temperature to burn off particulates from a DPF is normally only achieved in exhaust gas from a diesel engine when the engine is operating at high revolutions per minute (RPM) and high load. A diesel engine under normal operation produces exhaust gases with a temperature in the region of 200°C -350°C.

To create higher exhaust temperatures under normal operation the engine is controlled to run with poor efficiency. The energy available in the fuel has to be used to heat up the exhaust gases rather than to do mechanical work.

Most modern direct injection (DI) diesel engines inject fuel directly into the combustion chamber of a piston cylinder through an injector. The injector delivers a "pulse" of fuel of a duration corresponding to the required amount of power output of the engine. The timing of the pulse can be modified according to the required combustion characteristics.

As modern DI diesel engines can produce fuel injections of varying amounts at varying times in a crank cycle, multiple fuel injections can be made in one cycle. For example, a pilot fuel injection introduces a small amount of fuel immediately prior to the main, power producing, fuel injection. This smoothes the start of combustion and, consequently, helps to reduce noise and improves the cold start capability of diesels.

There are a number of ways to make a DI diesel engine run inefficiently and thereby produce hotter exhaust gases.

One method is to inject the main fuel injection pulse in a cylinder later than normal. The main fuel injection pulse can be injected as late as 30 degrees after top dead centre. Another method is to inject a post fuel injection pulse very late after the main fuel injection pulse.

The first method is less efficient than normal operation and as such produces less mechanical work and more heat in the exhaust gas.

Either method ensures that part of the fuel that is injected does not burn during the combustion and is subsequently exhausted as unburned hydrocarbons.

In a typical diesel exhaust system a Diesel Oxidation Catalyst (DOC) is mounted prior to a DPF. When unburned hydrocarbons enter a DOC an exothermic reaction occurs.

A hotter exhaust gas temperature due to the late injection of the main injection pulse and the exothermic reaction in the DOC give the potential to obtain the required temperature to burn particulates collected in the DPF.

To enable the above methods to work, fuel must be supplied to the engine. When fuel is not supplied, no combustion occurs and the exothermic reaction in the DOC stops. This results in a very rapid decrease in temperature of the gases exiting the DOC. Of course, this also results in the particulates no longer being burned off. When fuel is supplied to the engine again it takes time for the temperature of the gases exiting the DOC to rise sufficiently for the particulates to burn off.

Typically, under deceleration of a diesel engine or when minimum engine brake torque is required, no fuel is injected. A deceleration fuel-cut-off ensures that pilot, main, post, and any other fuel injection pulse quantities are zero.

According to a first aspect of the present invention there is provided a method of regenerating a particulate filter in an exhaust system of an internal combustion engine during deceleration, the method comprising injecting at least one fuel injection pulse.

Preferably, the at least one fuel injection pulse is a minimum fuel injection pulse.

Injectors in an internal combustion engine typically have a minimum amount of fuel that can be delivered. A minimum fuel injection pulse is the least amount of fuel that the injector can deliver.

Preferably, the at least one fuel injection pulse is at the same time as the main fuel injection pulse would otherwise be.

Preferably, the method comprises retarding the at least one fuel injection pulse in relation to normal operation.

Normal operation usually requires a main injection pulse just prior to the top dead centre (TDC) position of a piston. Variable injection timing may require that the main injection pulse is at a time other than just prior to TDC under normal operation.

By retarding the fuel injection pulse, or pulses, timing from normal operation, fuel injected provides only a small amount of torque and the internal combustion engine can continue to decelerate. Consequently, as energy from the combusted fuel does not provide torque, exhaust gases are heated to a greater degree.

Preferably, the method comprises retarding the at least one fuel injection pulse by up to 20 degrees after top dead centre.

Preferably, the method further comprises injecting an additional post fuel injection pulse.

A post fuel injection pulse is a fuel injection very late in a piston cycle, compared to TDC, but before gases are exhausted. The majority of the post fuel injection pulse is not combusted but rather is exhausted along with the combustion gases. There is very little torque output from the post injection because of the small amount of combustion and/or the fact that the combustion is late in the piston cycle.

Fuel in the exhaust system reacts with a Diesel Oxidation Catalyst (DOC) providing an exothermic reaction which provides additional heat for exhaust gases.

Alternatively, the at least one fuel injection pulse is at the same time as the post fuel injection pulse would otherwise be.

The fuel injection pulse may be specifically timed to occur at a position in a combustion cycle which does not produce complete combustion. This is normally termed a 'post' fuel injection pulse. However, in this case there is no fuel injection at, or around, the normal combustion timing. The fuel injected does not completely combust as pressure in the cylinder is already decreasing. The gases exhausted from the cylinder are only heated by the partial combustion which occurs and hydrocarbons are available to react with the DOC.

Alternatively or further preferably, the method further comprises minimising a supply of fresh air to the internal combustion engine.

A decreased supply of fresh air leads to an increase in the exhaust gas temperature as a consequence of the reduced mass of gas exposed to heat released during combustion.

Preferably, minimising the supply of fresh air comprises throttling of an air intake to the internal combustion engine.

Alternatively or further preferably, minimising the supply of fresh air comprises increasing exhaust gas recirculation (EGR) to the internal combustion engine.

According to a second aspect of the present invention there is provided an internal combustion engine comprising a fuel injector, wherein, during deceleration, the fuel injector provides at least one fuel injection pulse.

Preferably, the at least one fuel injection pulse is a minimum fuel injection pulse.

Preferably, the at least one fuel injection pulse is at the same time as the main fuel injection pulse would otherwise be.

Preferably, the at least one fuel injection pulse is retarded from normal operation.

Preferably, the at least one fuel injection pulse is retarded by up to 20 degrees after top dead centre.

Preferably, the injector injects an additional post fuel injection pulse.

Alternatively, the at least one fuel injection pulse is a post injection fuel pulse.

Alternatively or further preferably, the internal combustion engine comprises a fresh air supply minimising means.

Preferably, the fresh air supply minimising means comprises a fresh air supply throttle, wherein closing of the throttle restricts the fresh air flow to the internal combustion engine.

Alternatively or further preferably, the fresh air supply minimising means comprises an exhaust gas recirculation (EGR) system, wherein increasing the rate of EGR restricts the intake of fresh air.

Embodiments of the present invention will now be described with reference to the accompanying drawings, in which:
Fig. 1 shows an internal combustion engine of the present invention with exhaust system and engine control unit;
Fig. 2 shows a graphical representation of crank angle versus fuel injection; and
Fig. 3 shows a flow diagram representing the present invention.

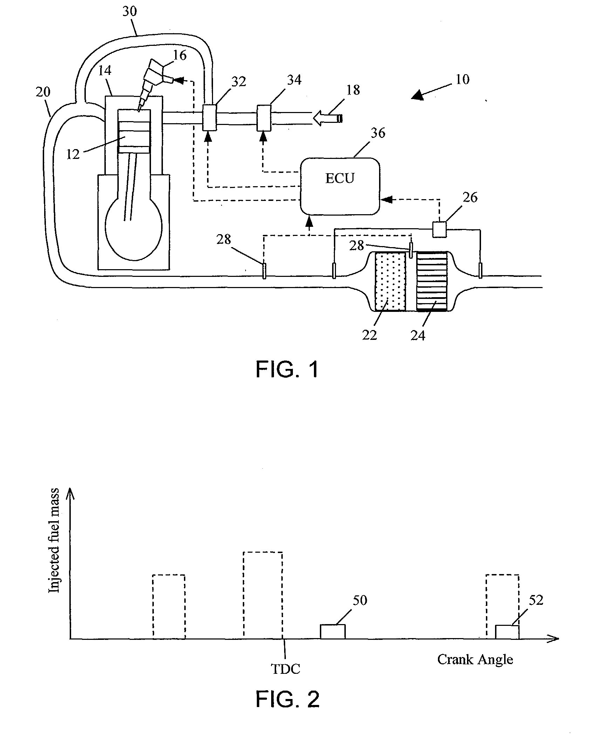

A diesel internal combustion engine 10 is shown with a piston 12 inside a cylinder 14 which turns a crank shaft (not shown) in conjunction with other similar pistons (not shown) when fuel is combusted within the cylinder 14. Fuel is injected by a fuel injector 16 and air is passed into the cylinder from an air inlet 18 by way of a inlet valve (not shown) on the cylinder 14. After combustion, post-combustion gases are exhausted by way of an outlet valve (not shown) into an exhaust system 20. A Diesel Oxidation Catalyst (DOC) 22 reduces or eliminates carbon monoxide and unburned hydrocarbons in gases within the exhaust system 20. A Diesel Particulate Filter (DPF) 24 then substantially removes particles from gases within the exhaust system 20. A differential pressure sensor 26 monitors the DPF 24 for build up of particulates which resists the flow of exhaust gases passing through the DPF 24, thereby causing a pressure drop. Temperature sensors 28 monitor the temperature of exhaust gases passing through the exhaust system 20. In this instance, one temperature sensor is shown before the DOC 22 and one after. In other systems it may be that the arrangement and number of temperature sensors is different from that shown in Fig. 1.

The exhaust system 20 also includes an Exhaust Gas Recirculator (EGR) 30 which feeds exhaust gases back into the cylinder 14 by way of a EGR valve 32 in the air inlet 18. Furthermore, the air inlet 18 also includes an air inlet throttle 34 to limit the amount of fresh air that is allowed into the cylinder 14.

An Engine Control Unit (ECU) 36 receives inputs from the temperature sensor 28 and differential pressure sensor 26 and may alter settings of the fuel injector 16, EGR valve 32 or air inlet throttle 34 accordingly.

In prior art systems, when an engine is required to decelerate; fuel supply is cut off to the injectors. This allows combustion to cease within the engine. Consequently, no torque is applied to the crankshaft, allowing the engine to slow down. Regeneration of a Diesel Particulate Filter would normally cease under these conditions, as the temperature of exhaust gases would quickly decrease.

When the ECU 36 of the present invention is required to decelerate the engine 10, fuel is not cut off entirely to the fuel injector 16. Instead, the ECU 36 injects a minimum amount of fuel from the fuel injector 16. As shown in Fig. 2, a minimum main fuel injection 50 is made at a time in the piston's 12 cycle such that the majority of the energy in the fuel is converted to heat rather than torque. The minimum main fuel injection 50 may be made at a time other than that shown in Fig. 2 as long as combusting the minimum fuel injection 50 produces a torque level which continues to allow deceleration.

The minimum fuel injection 50 may also be more than the minimum amount of fuel that the injector 16 can inject if the torque produced continues to allow deceleration.

Furthermore, the ECU 36 can also control the injector 16 such that a post fuel injection 52 is made. As the post fuel injection 52 is made some time after top dead centre (TDC), when compression has been reduced significantly, only a small amount of combustion occurs. A proportion of the post fuel injection 52 is exhausted as unburnt hydrocarbons which exothermically react with DOC 22. Exhaust gases exiting the DOC 22 have a higher temperature then those which entered the DOC 22.

The ECU 36 can also control the air inlet throttle 34 such that the amount of fresh air allowed into the cylinder 14 is reduced. By reducing the amount of fresh air into the cylinder 14, the mass of gas exposed to heat energy as a result of combustion is reduced. Therefore, gases exiting the cylinder 14 have absorbed a greater amount of heat energy and as a result are at a higher temperature.

Controlling the air inlet throttle 34 can also reduce pressure in the inlet manifold (not shown). Reducing the inlet manifold pressure increases "pumping losses" associated with the engine 10.

In previous solutions, work required to continue to turn an engine over without any combustion (due to zero fuel input) in the cylinders provides deceleration. This work is termed "pumping losses".

By increasing the pumping losses, additional fuel may be injected into the cylinder 14 without affecting the deceleration of the engine 10.

The ECU 36 can also control the EGR valve 32 such that a proportion of exhaust gases from the cylinder 14 are recirculated. Recirculating exhaust gases raises the temperature of gases in the cylinder 14 prior to combustion and consequently produces exhaust gases of a higher temperature. In addition, due to the recirculating exhaust gases the amount of fresh air into the cylinder 14 will be limited. Hence, as previously mentioned, the mass of gas exposed to heat energy as a result of combustion is reduced

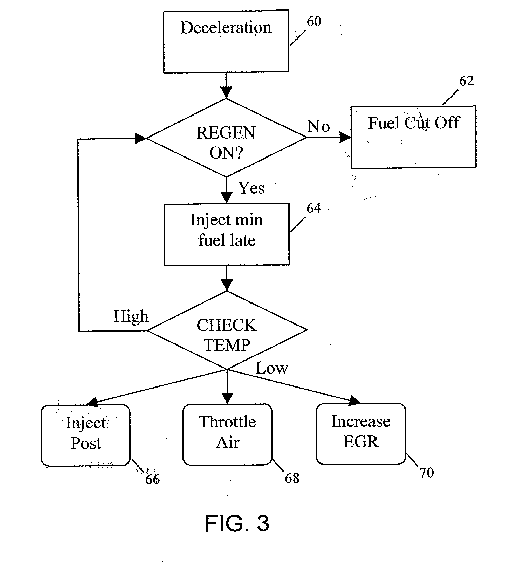

Operation of the ECU 36 is shown in Fig. 3. A deceleration check module 60 detects deceleration of the internal combustion engine 10, the ECU 36 then determines whether the DPF 24 is being regenerated. If the DPF 24 is not being regenerated a deceleration fuel cut-off 62 is applied. If the DPF 24 is being regenerated the deceleration fuel cut-off is not applied and a minimum main fuel injection 64 is performed. If exhaust gases from the cylinder 14 are raised to an adequate temperature for regeneration of the DPF 24 then no further processes are required. The temperature sensor 28 allows exhaust gas temperature to be monitored. If exhaust gas temperature is too low for DPF regeneration then ECU 36 may operate any of a post fuel injection 66, air inlet throttle or EGR rate increase 70.

## Claims

1. A method of regenerating a particulate filter (24) in an exhaust system (20) of an internal combustion engine (10) **characterised by**, during deceleration, injecting at least one fuel injection pulse (64) .

2. A method as claimed in claim 1, wherein the at least one fuel injection pulse (64) is a minimum fuel injection pulse.

3. A method as claimed in claim 1 or claim 2, wherein the at least one fuel injection pulse (64) is at the same time as the main fuel injection pulse would otherwise be.

4. A method as claimed in claim 3, wherein the method comprises retarding the at least one fuel injection pulse (64) in relation to normal operation.

5. A method as claimed in claim 3 or claim 4, wherein the method comprises retarding the at least one fuel injection pulse by up to 20 degrees after top dead centre.

6. A method as claimed in any preceding claim, wherein the method further comprises injecting an additional post fuel injection pulse (66).

7. A method as claimed in claim 1, wherein the at least one fuel injection pulse (64) is at the same time as the post injection fuel pulse would otherwise be.

8. A method as claimed in any preceding claim, wherein the method further comprises minimising a supply of fresh air (18) to the internal combustion engine (10).

9. A method as claimed in claim 8, wherein minimising the supply of fresh air (18) comprises throttling of an air intake (34) to the internal combustion engine (10).

10. A method as claimed in claim 8 or claim 9, wherein minimising the supply of fresh air (18) comprises increasing exhaust gas recirculation (EGR) (30, 32) to the internal combustion engine (10) .

11. An internal combustion engine (10) comprising: a fuel injector (16), **characterised in that**, during deceleration, the fuel injector (16) injects at least one fuel injection pulse (64).

12. An engine as claimed in claim 11, wherein the at least one fuel injection pulse (64) is a minimum fuel injection pulse.

13. An engine as claimed in claim 11 or claim 12, wherein the at least one fuel injection pulse (64) is at the same time as the main fuel injection pulse would otherwise be.

14. An engine as claimed in claim 13, wherein the at least one fuel injection pulse (64) is retarded from normal operation.

15. An engine as claimed in claim 13 or claim 14, wherein the at least one fuel injection pulse is retarded by up to 20 degrees after top dead centre.

16. An engine as claimed in claim 11 to claim 15, wherein the injector provides an additional post fuel injection pulse (66).

17. An engine as claimed in claim 11, wherein the at least one fuel injection pulse (64) is at the same time as the post injection fuel pulse would otherwise be.

18. An engine as claimed in claim 11 to claim 17, wherein the internal combustion engine (10) comprises a fresh air supply minimising means.

19. An engine as claimed in claim 18, wherein the fresh air supply minimising means comprises a fresh air supply throttle (34), wherein closing of the throttle restricts the fresh air flow (18) to the internal combustion engine (10).

20. An engine as claimed in claim 18 or claim 19, wherein the fresh air supply minimising means comprises an exhaust gas recirculation (EGR) system (30, 32), wherein increasing the rate of EGR restricts the intake of fresh air.
